# EUROPEAN PATENT SPECIFICATION

(11) **EP 3 039 626 B1**
(45) Date of publication and mention of the grant of the patent: **11.03.2020**
(21) Application number: 14766564.0
(22) Date of filing: 20.08.2014
(51) Int. Cl.: G06Q 20/10, G06Q 20/32, G06Q 20/40, H04W 12/06, G06Q 20/22, H04W 12/08, H04L 29/08, H04L 29/06

(54) **PRESENTING A DOCUMENT TO A REMOTE USER TO OBTAIN AUTHORIZATION FROM THE USER**
PRÄSENTATION EINES DOKUMENTES AN EINEN ENTFERNTEN BENUTZER FÜR DEN ERHALT EINER AUTORISIERUNG DES BENUTZERS
PRÉSENTATION D'UN DOCUMENT À UN UTILISATEUR DISTANT POUR OBTENIR UNE AUTORISATION DE L'UTILISATEUR

(30) Priority: 28.08.2013 US 201314012005; 14.11.2013 US 201314080292; 14.03.2014 US 201414212783
(43) Date of publication of application: 06.07.2016
(73) Proprietor: Zukunftware, LLC, Eden, Utah 84310 (US); Neuwirth, Volker, Eden, Utah 84310 (US)
(72) Inventor: NEUWIRTH, Volker, Eden, Utah 84310 (US)
(74) Representative: Dummett Copp LLP
(86) International application number: PCT/US2014/051879
(87) International publication number: WO 2015/031129

(56) References cited:
- WO-A1-2007/128131
- US-A1- 2006 064 373
- US-A1- 2012 011 066
- US-B1- 7 934 098

## Description

### BACKGROUND

Mobile computing devices such as smart phones and tablets are becoming commonplace in today's world. Such devices enable users to perform transactions in virtually any location. For example, using a smart phone, a user can make online purchases or purchases over the phone from any remote location having an appropriate connection. In many transactions, the user's authorization to enter into a transaction can be received over the phone or by clicking a checkbox in a webpage.

In spite of the mobility provided by such devices, many transactions still cannot be performed by a remote user. Some transactions (e.g. recurring payments) often cannot be completed without receiving a signature from the user. For this reason, to authorize some transactions, remote users are required to mail or fax a signed paper to the entity performing the transaction. Examples of transactions that require a user's signature include authorization to make recurring debits from the user's account for repaying a loan or authorization to make recurring charges to a user's credit card for a subscription service.

Printing, signing, and returning a document can be a burdensome requirement for many users. Accordingly, when a signature is required for authorizing a transaction remotely, users are not able to fully benefit from the mobility provided by their portable devices.

An example of a prior art method and system for authenticating an identity of a payer in a financial transaction is disclosed in US 2012/0011066 A1. In this document, a one-time password is used to authenticate the identity of a cardholder in a financial transaction initiated a cardholder computer system of the cardholder with a merchant via a first communications channel. A merchant computer system communicates with an interchange server at, for example, a credit card company. The interchange server then generates and sends the one-time password to the cardholder computer system using contact information for the cardholder via a second communications channel, following which the cardholder computer system sends this password to the merchant computer system via the first communications channel to authenticate the identity of cardholder.

An example of a prior art method is disclosed in US 7,934,098 B1. This describes how an applicant, for example a job applicant, can electronically sign an electronic document in order to authorize background information concerning the applicant to be provided from third party information providers to an entity to whom the applicant is applying, for example, a prospective employer of the job applicant. The process is managed by a signature management system which receives a request from the employer to obtain the background information on the applicant. The signature management system sends an email to the applicant with a link which when selected by the applicant causes a web page to be presented to the applicant with the one or more documents to be signed. The user clicks a link to upload the signed documents to the signature management system, which uses the authorization provided by the signed documents to obtain the background information from the third party information providers, and to forward this information to the employer.

### BRIEF SUMMARY

Described herein are systems, methods, and computer program products for receiving a signature (or other type of verification or confirmation) from a remote user. The present invention enables a merchant to send a signature request over a network to any device having a browser and touch screen or other means for receiving user input. An input area is displayed within the browser on the user's device. When the user inputs a signature, the signature can be routed over a network back to the merchant to provide authorization for a transaction. In particular, the invention provides a method, implemented by a server computing system, for enabling a merchant computing system to present a document representing an agreement to a user using a client computing device and to obtain user input from the user to serve as authorization from the user to cause the performance of the agreement, as set forth in Claim 1 of the appended claims.

In one example, the present invention is implemented as a method for providing a request for user input to a client computing device over a network. A first request is received from a merchant computing system. The first request requests that a second request for user input be sent to a client computing device. The first request includes contact information for a user of the client computing device. The second request for user input is then generated. The second request for user input is sent to the client computing device using the contact information. The second request also requests authenticating information to authenticate the user input. The user input is received from a user of the client computing device. The authenticating information is received from the client computing device. User interface code is generated which when rendered causes the user input received from the client computing device to be displayed on the merchant computing system. The user interface code is sent to the merchant computing system to enable the merchant computing system to render the user interface code to display the user input in conjunction with account information for the user on the merchant computing system such that the user input can serve as authorization from the user for a transaction to the account.

In another example, the present invention is implemented as a method for requesting user input from a remote user over a network. Account information of a user is received for performing a transaction. Contact information of the user is also received. A request for user input is sent to a client computing device of the user to authorize the transaction. The request is sent using the contact information of the user. The request identifies one or more types of authenticating information that the user is to provide to authenticate the user's identity. The user input is received over the network. A user interface is generated. The user interface includes the account information in conjunction with the user input such that the user input serves as authorization from the user to perform the transaction. The transaction is then performed using the account information and the user input.

In another example, the present invention is implemented as a method for providing a request for user input to a client computing device over a network. A first request is received from a merchant computing system. The first request requests that a second request for user input be sent to a client computing device. The first request includes contact information for a user of the client computing device and a document to be presented to the user, the document representing an agreement that the user has made or will make. The second request for user input is generated and sent to the client computing device using the contact information. The second request includes the document to be presented to the user. The user input is received from a user of the client computing device. The user input comprises an authorization for the performance of the agreement. The user input is sent to the merchant computing system to enable the merchant computing system to cause the performance of the agreement authorized by the user input.

In another example, the present invention is implemented as a method for providing a request for user input to a client computing device over a network. Contact information for a user of a client computing device and a document to be presented to the user are received from a merchant computing system. The document represents an agreement that the user has made or will make. A message is sent to the client computing device. The message contains a link which when selected causes the server computing system to send a first user interface to the client computing device, the first user interface including a request for authentication information. In response to receiving the authentication information from the client computing device, a second user interface is sent to the client computing device. The second user interface includes the document. A third user interface is sent to the client computing device. The third user interface includes a request for user input. The user input comprises an authorization for the performance of the agreement. In response to receiving the user input from the client computing device, the user input is sent to the merchant computing system to enable the merchant computing system to cause the performance of the agreement authorized by the user input.

### BRIEF DESCRIPTION OF THE DRAWINGS

In order to describe the manner in which the above-recited and other advantages and features of the invention can be obtained, a more particular description of the invention briefly described above will be rendered by reference to specific examples thereof which are illustrated in the appended drawings. Understanding that these drawings depict only typical examples of the invention and are not therefore to be considered to be limiting of its scope, the invention will be described and explained with additional specificity and detail through the use of the accompanying drawings in which:
Figure 1 illustrates an exemplary computer environment in which the present invention can be implemented;
Figure 2 illustrates an exemplary user interface that can be displayed by a merchant computing system to allow a signature to be requested from a remote user;
Figure 3 illustrates an example text message displayed on a smart phone that includes a link to an interface for inputting a signature;
Figures 4A-4B illustrate an exemplary user interface that can be displayed on a client computing device to receive a signature from a user;
Figure 5 illustrates the user interface of Figure 2 after it has been updated to include an image of a check;
Figure 6 illustrates the user interface of Figure 2 after it has been updated to include an image of a credit card receipt;
Figure 7 illustrates the user interface of Figure 5 after a signature has been received;
Figure 8 illustrates the user interface of Figure 6 after a signature has been received;
Figure 9 illustrates an exemplary authentication user interface that can be displayed on a client computing device to perform user authentication;
Figure 10 illustrates a flowchart of an exemplary method for providing a request for user input to a client computing device over a network;
Figure 11 illustrates a flowchart of an exemplary method for requesting user input from a remote user over a network;
Figure 12 illustrates a flowchart of an exemplary method for remotely providing user input to authorize a transaction;
Figures 13-16 each illustrate a sequence of user interfaces that can be displayed on a client computing device to present a document to the user; and
Figure 17 illustrates an example audit report.

### DETAILED DESCRIPTION

Examples of the present invention may comprise or utilize a special purpose or general-purpose computers including computer hardware, such as, for example, one or more processors and system memory, as discussed in greater detail below. Examples within the scope of the present invention also include physical and other computer-readable media for carrying or storing computer-executable instructions and/or data structures. Such computer-readable media can be any available media that can be accessed by a general purpose or special purpose computer system.

Computer-readable media is categorized into two disjoint categories: computer storage media and transmission media. Computer storage media (devices) include RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other similarly storage medium which can be used to store desired program code means in the form of computer-executable instructions or data structures and which can be accessed by a general purpose or special purpose computer. Transmission media include signals and carrier waves.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language or P-Code, or even source code.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, smart phones, PDAs, tablets, pagers, routers, switches, and the like.

The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

In the following description, the present invention will be described primarily using an example of obtaining a signature from a remote user using a touch screen device. However, it is emphasized that the present invention is not limited to obtaining a signature, but can be used to obtain any type of input from a remote user. Further, the description also primarily describes the use of email or text message for sending requests to a client computing device. However, it is also emphasized that any communication format that allows a link to be included in the message content can equally be used as described below.

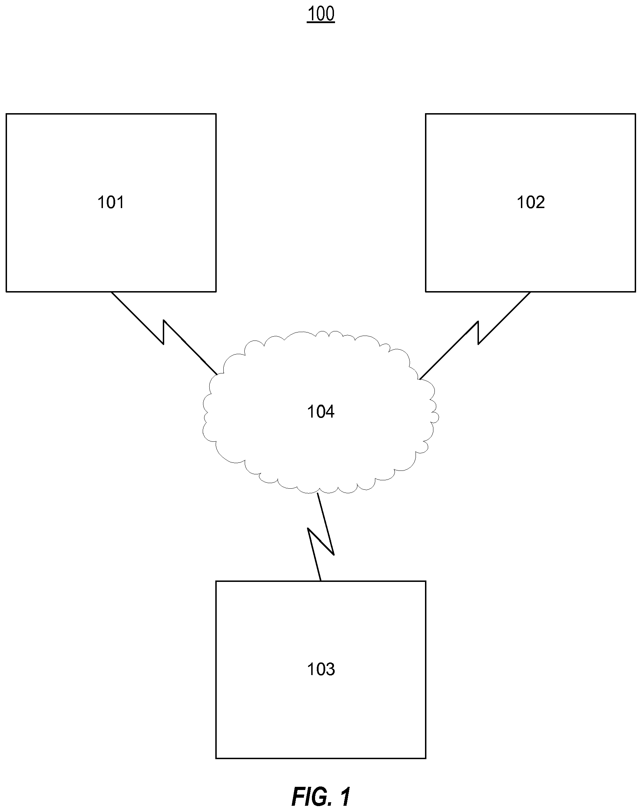

Figure 1 illustrates an exemplary computer environment 100 in which the present invention can be implemented. Computer environment 100 includes server system 101, merchant computing system 102, and client computing device 103 which are each connected via a network 104. In a typical implementation, network 104 comprises the internet although other network connections could be used to interconnect any of the systems of computer environment 100. Client computing device 103 represents any device having a browser and a touch screen or other means for receiving a user's signature. For example, client computing device 103 may comprise a smart phone or tablet with a touch screen that allows a user to use his finger to provide a signature. Client computing device 103 could also comprise a desktop or laptop computer without a touchscreen in which case the user can use a mouse or other input device to provide a signature.

Merchant computing system 102 represents one or more servers or other computing devices that a merchant uses to send requests to server system 101 over network 104. These requests can include requests that server system 101 generate and send a signature request to client computing device 103.

Server system 101 represents one or more computing devices used to receive requests from merchant computing system 102, and to send requests for signatures to client computing device 103 and receive signatures back from client computing device 103. Server system 101 can comprise one or more server computing devices or a cloud of server computing systems.

Accordingly, server system 101 acts as an intermediary between merchant computing system 102 and client computing device 103 for requesting and obtaining a signature and/or account information from a user of client computing device 103. Server system 101 can employ any suitable interface for receiving requests from merchant computing system 102. In one particular example, a Simple Object Access Protocol (SOAP) interface can be provided to allow merchants to make requests for signatures and receive signatures using SOAP requests and responses respectively. In this manner, server system 101 can provide a third party tool for obtaining signatures that is easily incorporated into any merchant's business processes.

Although Figure 1 illustrates that a merchant system uses an intermediary server system to send requests to the client computing device, the invention can also be implemented when the merchant system directly communicates with client computing device. In such cases, merchant system can be configured to perform the functionality described as being performed by the server system in the following description.

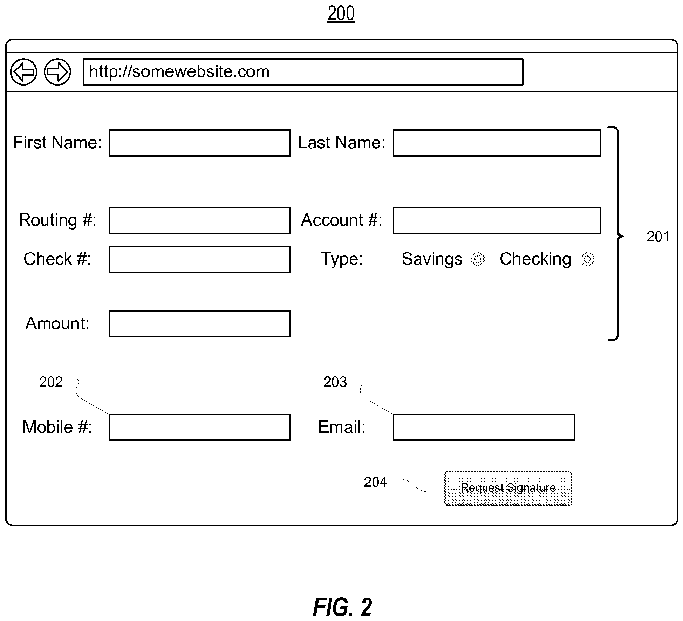

Figure 2 illustrates an exemplary user interface 200 that can be displayed by merchant computing system 102 to an employee to allow the employee to request a signature from a remote user of client computing device 103. For example, the employee may be communicating with the user to establish a subscription or other agreement requiring the user to make recurring (e.g. monthly) payments. Such agreements may require a signature from the user to authorize monthly payment, such as in the form of a monthly ACH debit or credit card charge.

Although this example refers to an employee requesting a signature, the merchant computing system 102 can generate requests automatically. Also, the merchant computing system 102 can request signatures from one or many different remote users (i.e. merchant computing system 102 can make batch requests for signatures). For example, merchant computing system 102 can send a batch request to server system 101 requesting signatures or other user input from many different users.

In prior approaches, the user would provide a signature generally by printing, signing, and returning a form via mail or fax. Such approaches are burdensome. The present invention enables a signature to be quickly and easily obtained from a user by employing server system 101.

User interface 200 represents an example where the merchant is attempting to receive a signature to authorize an ACH debit. Accordingly, user interface 200 includes fields 201 for receiving user information including the user's name, a bank routing number, an account number, a check number, an account type, and an amount. Fields 201 are exemplary of information that may be required for an ACH transaction; however, not all information shown is required in all examples of the present invention.

User interface 200 also includes fields 202, 203 for receiving a mobile phone number or an email address for the user. The employee can input either or both the user's phone number or email address. Once input, the employee can select request signature button 204 which causes a request to be sent to server system 101 requesting that a signature request be generated and sent to a client computing device. The signature request sent to the client computing device can be in any format capable of including a hyperlink as described below. For example, the signature request can be a text message, an email, an instant message, or a social networking (e.g. Twitter, Facebook, Google +, etc.) message. Some or all of the information input into fields 201 can also be included in the request sent to server system 101.

Although not shown in Figure 2, user interface 200 can also provide one or more additional fields for receiving other information such as free form text. Any or all of this information can be included in the request sent to server system 101 for subsequent inclusion in a message sent to a client computing device.

As stated above, the request sent to server system 101 can be in the form of a SOAP request. As such, logic for making the request can be easily incorporated into a merchant's existing systems or included in new systems designed to obtain signatures from a remote user.

When server system 101 receives the request from merchant computing system 102, it can generate a message to send to the user in accordance with the information supplied in the request. For example, if the request indicates a mobile phone number, a text message can be generated, whereas if the request indicates an email address or Facebook username, an email or Facebook communication respectively can be generated. The generated message can include any combination of the information provided in the request received from merchant computing system 102 as well as other information provided by server system 101. For example, the generated message can include free form text provided by merchant computing system 102 that can be displayed to the user of client computing device 103.

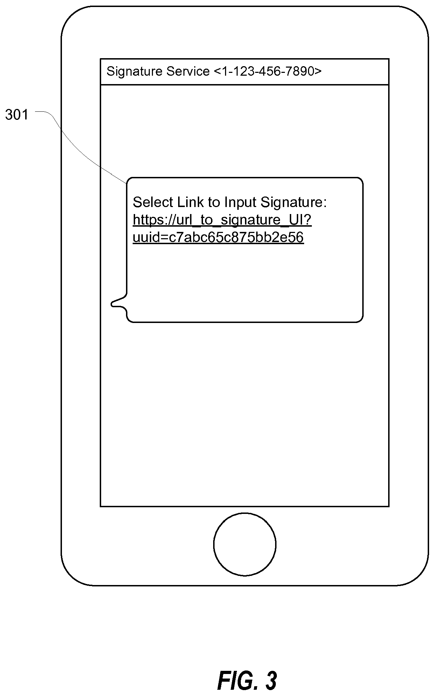

The generated message can include a link to a service for obtaining the signature from the user using client computing device 103. For example, Figure 3 illustrates an example text message 301 displayed on a smart phone that includes a link that the user can select to receive an interface (e.g. a web page) for inputting a signature. In some examples, the message can have an associated expiration time, after which the message can no longer be used to provide a signature (e.g. the link in the message becomes invalid after the expiration time).

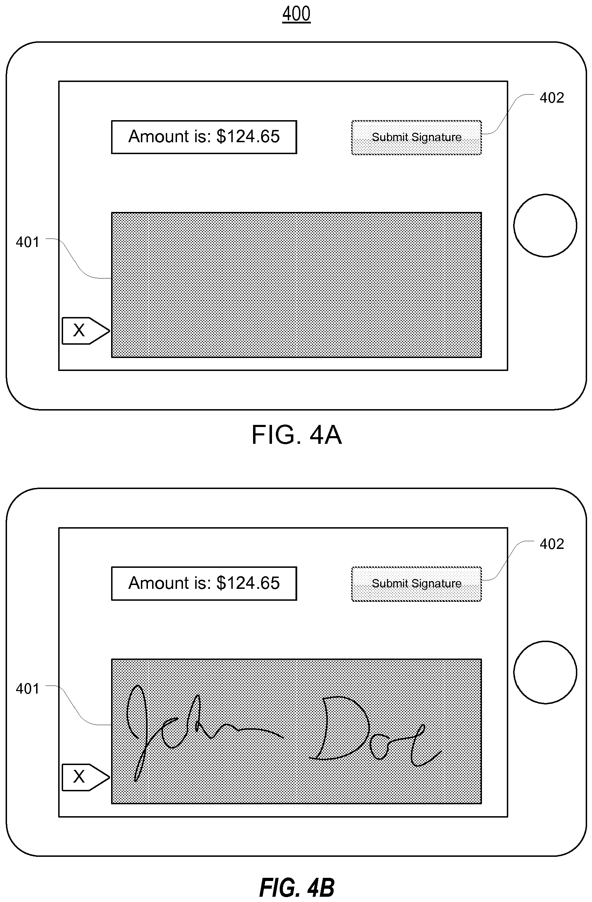

Figure 4A illustrates a user interface 400 that can be displayed to the user on client computing device 103 to allow the user to input a signature. User interface 400 comprises a signature area 401 in which the user signs his name. In some examples, user interface 400 is browser based. Because a browser based approach can be used, client computing device 103 does not need any additional software beyond what is typically included in such devices (e.g. a standard browser) to input a signature. User interface 400 can also include other information beyond what is shown in Figures 4A and 4B. For example, user interface 400 can include free form text provided in the request received from merchant computing system 102.

In some examples, signature area 401 can be configured to appear as a check, receipt, document, or other instrument which a user may sign to provide authorization for some action. For example, if the user is providing authorization to make periodic deductions from his checking account, the signature area 401 can appear as a check having the user's bank routing number and account number. In such cases, the account information (e.g. bank routing number, checking account number, credit card number, other account number or identifier, transaction amount, action to be authorized, etc.) to be displayed within signature area 401 can be provided by merchant computing system 102 (whether prior to or with the request for user input) to allow server system 101 to generate the appropriate display.

Once the user has input his signature as shown in Figure 4B, he can select the process button 402 which captures the signature and causes the signature to be sent back to server system 101 which routes the signature back to merchant computing system 102 (e.g. as a SOAP response). In a typical implementation, a user inputs his signature using his finger on the touch screen. However, the user can also input his signature in other ways such as by using a stylus, mouse, or other input device.

Once merchant computing system 102 has received the signature of the user, merchant computing system 102 can route the appropriate information to a third party payment processor (e.g. a clearinghouse). Also, a receipt or other evidence of the submission of the signature/input can be provided back to the client computing device 103 via any communication means (e.g. email, text, social media communication, etc.). This receipt can act as a confirmation to the user that the user provided the requested input.

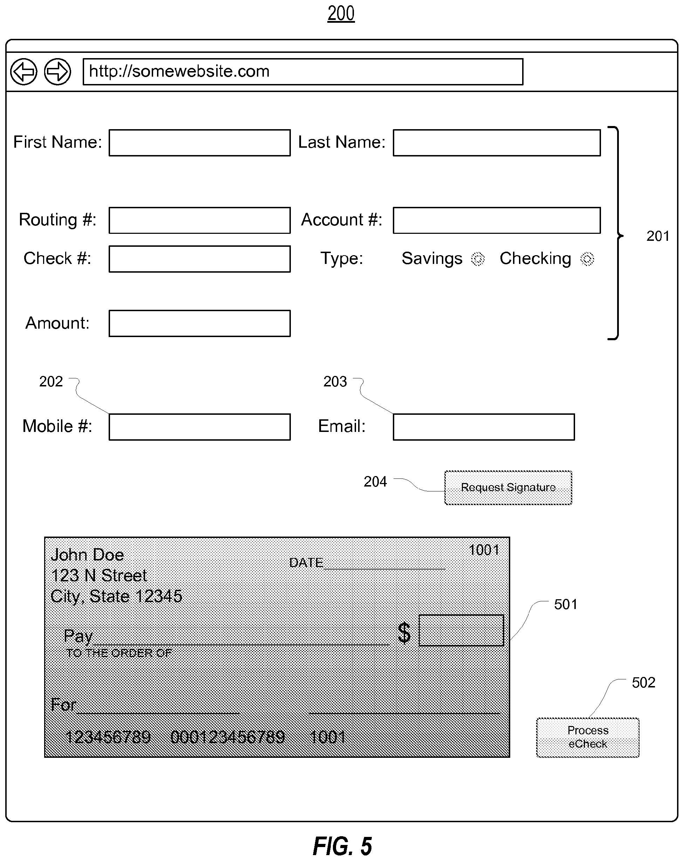

In some examples, user interface 200 can generate a display of a check, credit card receipt, or other instrument to represent a transaction to be performed. For example, Figure 5 illustrates that user interface 200 has been updated to include an image of a check 501. The image of the check can be generated based on the information input into fields 201. For example, when the employee selects the request signature button 204, the information input into field 201 can be accessed to populate the routing number, account number, check number, etc. into the image of the check.

In some examples, the image of the check (or other type of image such as a credit card receipt) can be generated by server system 101 using the information input into field 201, and returned to merchant computing system 102 for display within user interface 200. In this manner, the logic required to implement user interface 200 on merchant computing system 102 can be further simplified, and can even allow user interface 200 to be browser based.

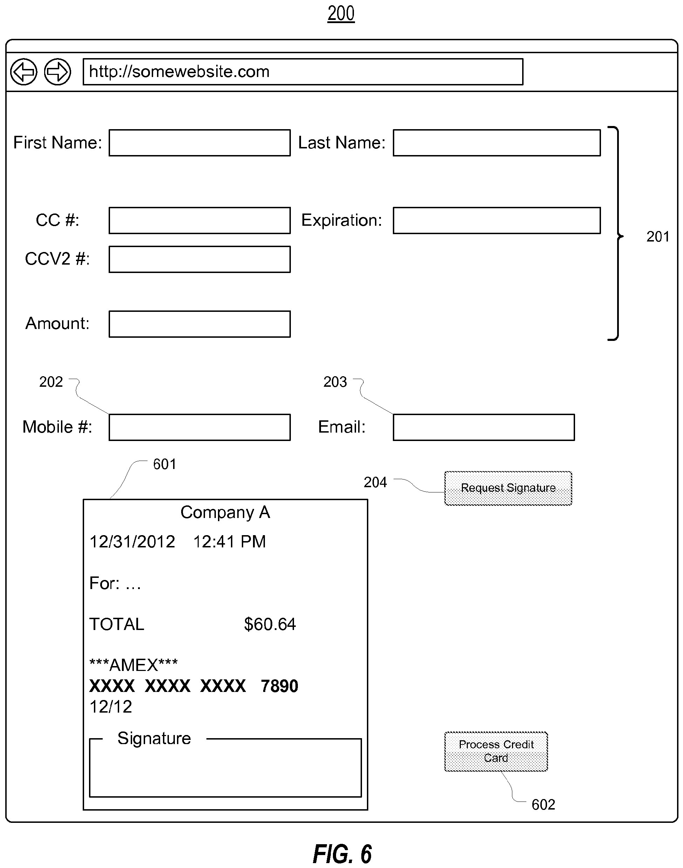

Figure 6 illustrates user interface 200 when a signature is being requested to authorize a credit card transaction. As shown, user interface includes an image of a credit card receipt 601 that includes a portion of the credit card number, the expiration date, the amount, etc.

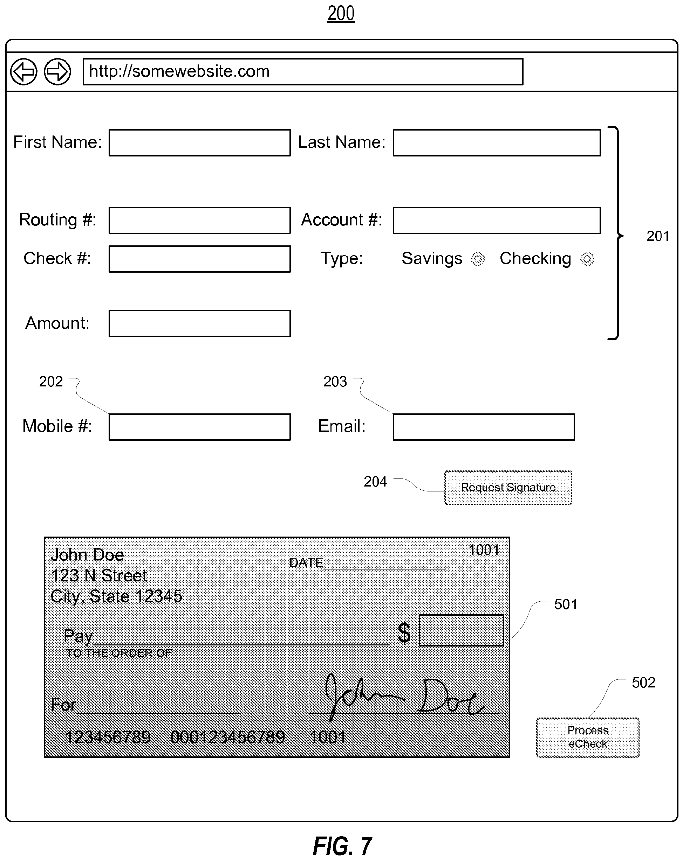

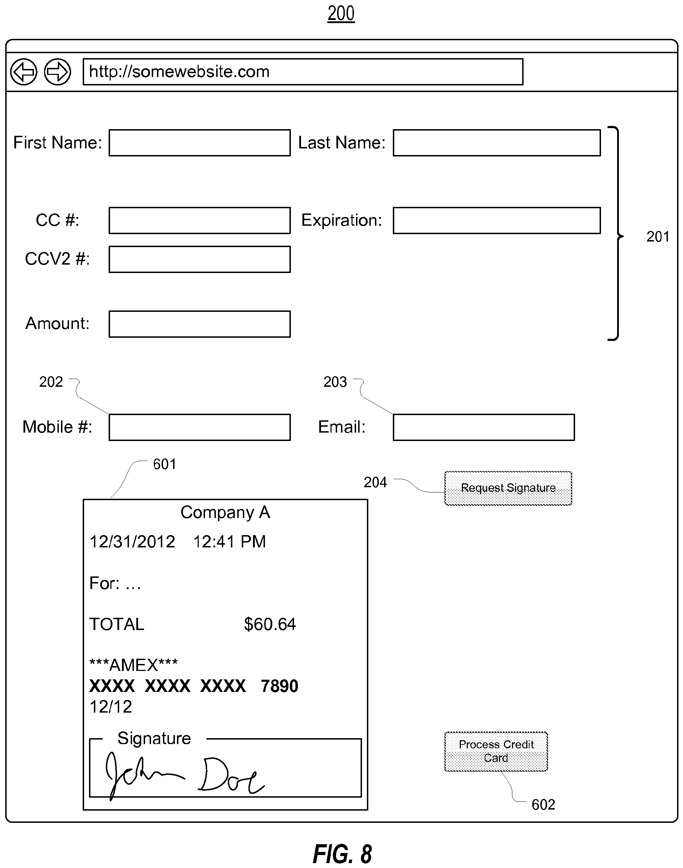

Figures 7 and 8 illustrate user interface 200 after the signature has been received to authorize a check and credit card transaction respectively. As shown in each figure, the signature has been added to user interface 200 to indicate to the employee that the user's signature has been received, and the transaction is ready to be submitted to the third party payment processor. As shown in Figure 7, the signature can be added directly to the image of the check on the signature line as if the user had directly signed the check. Similarly, in Figure 8, the signature is shown as having been added to the receipt. A process eCheck button 502 and a process credit card button 602 can also be provided for submitting the information once a valid signature has been obtained.

Although the above examples of obtaining a signature have related to financial transactions, the present invention can equally be used to obtain a signature for any type of transaction or for any other purpose. For example, the present invention can be used by a courier service such as FedEx or UPS to obtain a signature to authorize a package to be left on a person's doorstep even when the person is not home. Similarly, the present invention can be used to obtain consent from a user for any other purpose. In other words, with only an identifier of a user (e.g. phone number, email address, social networking identifier, etc.), a merchant can make a request, via server system 101, for a signature for any purpose.

For example, a courier service could use server system 101 to make batch requests for signatures to approve of leaving packages at customers' doors. When an approval is received from a customer, the approval can be routed to a delivery person to inform the delivery person that the corresponding package can be left at the door. Similarly, server system 101 can be used to make batch requests for authorizations to charge customers' accounts for a service. As each authorization is received, the corresponding account can be charged.

Further, although the above description uses the example of obtaining a signature from a user, the present invention can also be used to receive other input from a user. For example, if a merchant requires that a user input a pin or other confirmation input, the present invention can be used to send a request for such input. In such cases, rather than (or in addition to) displaying signature area 401 when the user selects the link on client computing device 103, another area can be displayed for receiving the desired input (e.g. a form for entering a password, pin, or other identifier, or a button or other UI element for providing confirmation).

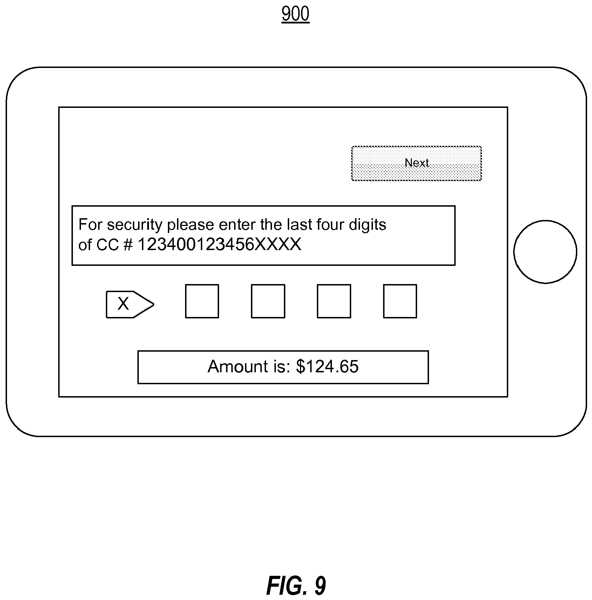

Figure 9 illustrates how server system 101 can require authentication prior to providing a signature user interface to client computing device 103. For example, after the user selects the link included in the message (e.g. text message 301), server system 101 can cause authentication user interface 900 to be displayed to the user. Authentication user interface 900 can include sufficient information to identify the transaction for which the user is providing his signature.

Authentication user interface 900 can prompt the user to provide authenticating information to authenticate the user. As shown, authentication user interface 900 can prompt the user to provide the last four digits of the routing number of the user's checking account. Other types of authenticating information can also be requested such as other account information (e.g. a pin, last four digits of credit card number, a portion of a tracking number for a package, etc.), personal information (e.g. the user's birth date or social security number), etc.

Authentication user interface 900 can provide the benefit of ensuring that the user receiving the message from server system 101 is the intended recipient. For example, if the employee of the merchant input appropriate account information into fields 201 of user interface 200, but mistyped the phone number or email address into fields 202, 203 (thereby causing the message to be sent to an incorrect recipient), authentication user interface 900 can successfully prevent an unintended recipient from authorizing a transaction.

Server system 101 can be configured to notify merchant computing system 102 of a failure in the authentication process to allow the merchant to verify the information input to user interface 200 and resend a request if necessary. For example, the failure notification can be sent after a specified number of failed attempts by the user to input appropriate information to authentication user interface 900, after a specified duration of time without receiving authentication information, etc.

In some examples, authentication user interface 900 can also include means for the user to notify merchant computing system 102 that the signature request has been sent to the incorrect user or that the displayed information is incorrect. For example, a button, field, or other user interface element can be included that allows a user to send a notification back to merchant computing system 102 without providing a signature.

In some examples, to facilitate the use of the present invention, user interface 400 for receiving a user signature and authentication user interface 900 for authenticating a user can be provided within a standard web browser. In other words, these user interfaces can be browser based such that no additional hardware or software is required to be installed on client computing device 103 to provide a signature remotely.

To enhance the security of the user's information and signature, the present invention can employ encryption techniques to secure the information transmitted between the various computing systems. For example, the signature captured by client computing device 103 can be transmitted securely from client computing device 103 to server system 101 such as by using HTTPS or another secure protocol. Also, the signature or other user information can be stored on server system 101 as a secure token using AES 256 encryption or another type of encryption.

Accordingly, the present invention facilitates obtaining a signature from a remote user. Any network connected client computing device having a touch screen and a browser can be used to provide a signature remotely to authorize a transaction. In this manner, a signature can be provided for transactions requiring a signature as well as for transactions were a signature is desired but not required.

By providing a browser based solution for obtaining a signature, no additional software or hardware is required to be installed on a client computing device. For example, a typical client computing device can receive a text message or email which provides a link to a web page in which the signature can be input.

The present invention further simplifies the signature obtaining process by providing an interface (e.g. a SOAP interface) that any third party merchant can access to send requests for signatures. In other words, if a merchant desires to obtain signatures from remote users over the internet, the merchant need only adapt its business processes to the interface provided by server system 101 to make and receive appropriate SOAP requests and responses. Of course, SOAP is one particular way of implementing the present invention, but other protocols could also be used in a similar manner.

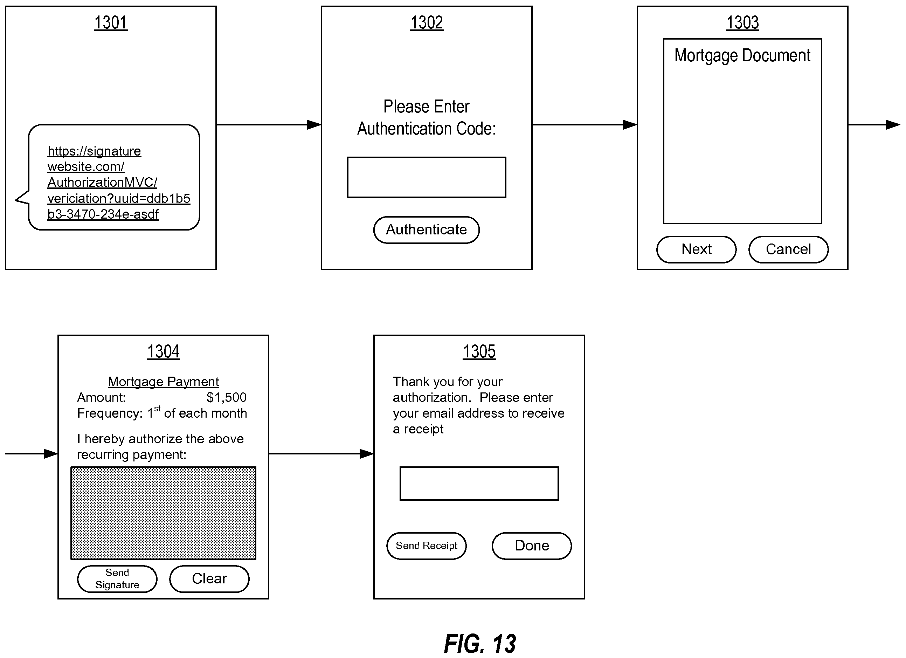

In some examples, the present invention may also enable the display of a document during a request for authorization. For example, if the request is for authorization to make a payment, the process may include displaying a bill to which the payment will be applied. Similarly, if the bill is recurring, the authorization can apply to a current payment as well as all future payments. In such cases where a payment is to be authorized and the merchant does not yet have payment information, the process can include displaying a user interface for receiving the payment information from the user. Alternatively, if the request is for authorization for a contract without any corresponding payment, the process may include displaying the contract. Accordingly, the authorization process can include any combination of displaying a document, an authorization user interface, and a payment information user interface. Various example sequences of user interfaces that can be displayed during an authorization process are described below with respect to Figures 13-16.

Figure 13 illustrates an example sequence of user interfaces 1301-1305 that can be displayed during a request to receive authorization to make a mortgage payment. In this sequence, it is assumed that merchant computing system 102 already has the user's payment information and therefore does not need to request it.

User interface 1301 displays a text message that includes a link which when selected opens user interface 1302. As described above, in some examples, user interface 1302 (as well as user interfaces 1303-1305) can be browser based. User interface 1302 prompts the user to input an authentication code. This authentication code is an example of the additional information that can be obtained from the user to authenticate the user as is described below in the section titled "Additional Features to Enhance The Authenticity of User Input." Other types of information can be obtained in place of or in addition to the authentication code to authenticate the user as is further described below.

If the user provides the appropriate authentication code (e.g. a portion of a social security number, a portion of payment information, a shared secret, etc.), user interface 1303 can be displayed. User interface 1303 comprises a mortgage document representing a mortgage payment that the user has agreed or will agree to pay. User interface 1303 can display the mortgage document in various ways including as a PDF, HTML, XML, or text.

After the user has had the opportunity to review the mortgage document, he can select the Next button which causes user interface 1304 to be displayed. User interface 1304 comprises a signature area in which the user can provide a signature to authorize a recurring payment using payment information already accessible to merchant computing system 102. In some examples, a representation of the payment information accessible to merchant computing system 102 can be displayed within user interface 1304 or another user interface to allow the user to verify the payment information.

After the user's signature is received, user interface 1305 can be displayed to allow the user to request a receipt for the transaction. User interface 1305 includes a field for receiving an email address of the user. However, other types of addresses can also be provided such as a phone number for receiving the receipt as an MMS message. To summarize, Figure 13 represents a process where the merchant presents a document to the user in order to receive authorization from the user to perform a transaction required by the document. A similar process can be performed when the merchant desires to receive a signature (or other form of authorization input) for an agreement that does not involve a concurrent payment. For example, a consent form, an EULA, or a purchase order could be presented in user interface 1303.

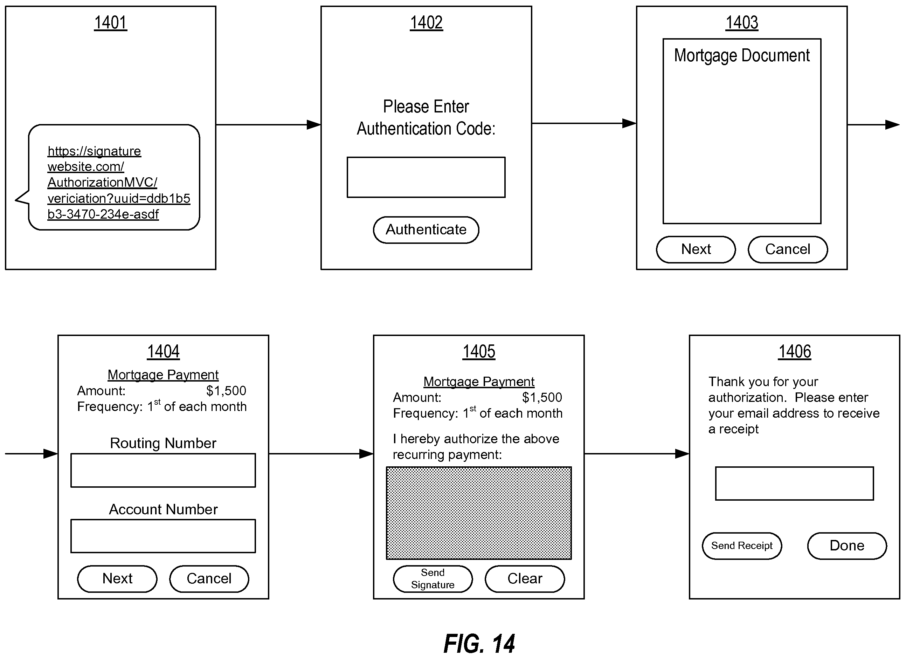

Figure 14 illustrates another example sequence of user interfaces 1401-1406 that can be displayed during a request to receive authorization to make a mortgage payment. The sequence depicted in Figure 14 differs from the sequence in Figure 13 in that Figure 14 includes a user interface (user interface 1404) for receiving payment information from the user. As shown, after the mortgage document is displayed to the user, user interface 1404 is displayed to request a bank routing number and an account number from the user that can be used to make recurring mortgage payments. After the user inputs the routing and account number, user interface 1405 is displayed to receive a signature from the user to authorize the recurring payments. Alternatively, user interface 1405 could display fields for receiving other types of authorization input from the user as described above.

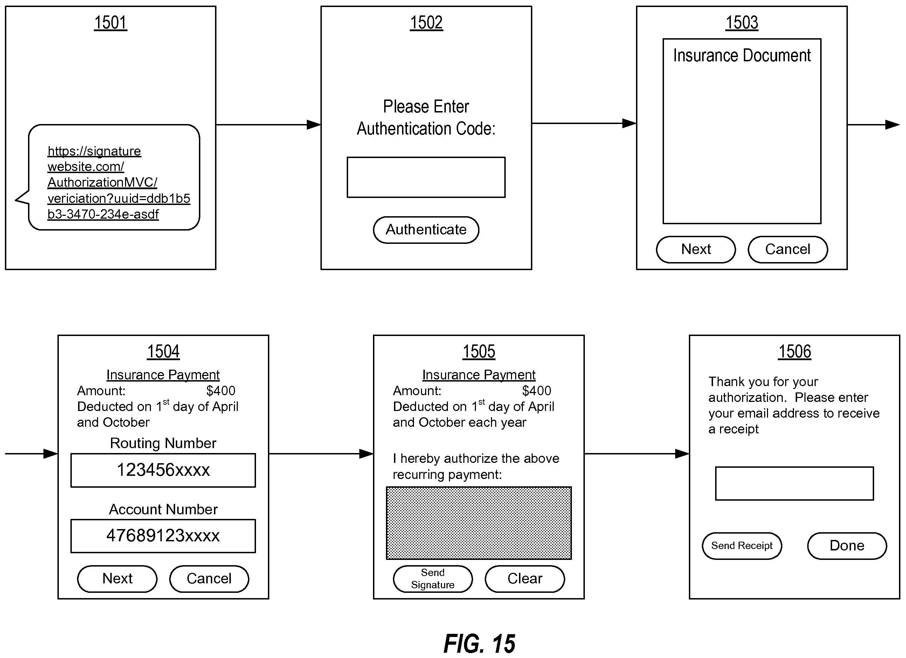

Figure 15 illustrates another example sequence of user interfaces 1501-1506 that can be displayed during a request to receive authorization to make an insurance payment. Figure 15 is similar to Figure 14 except that in Figure 15 user interface 1504 is prepopulated with the user's payment information. Accordingly, Figure 15 can represent a scenario where merchant computing system 102 already has the user's payment information but wants to receive verification from the user that the payment information should be used for the insurance payment.

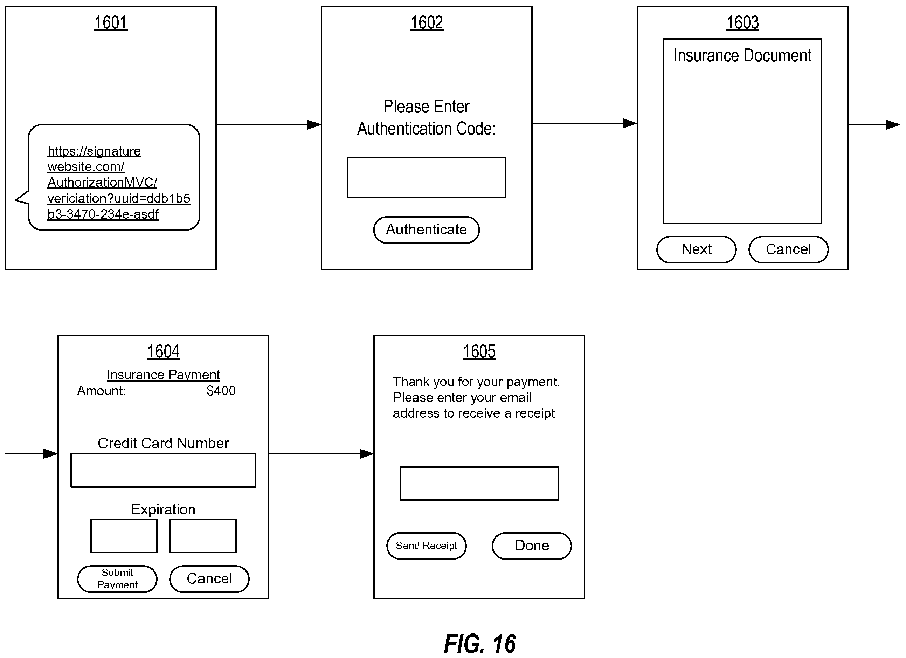

Figure 16 illustrates another example sequence of user interfaces 1601-1605 that can be displayed during a request to receive authorization to make an insurance payment. In this sequence, the user is not prompted to provide a signature or other authorization input. Instead, the user is prompted to input payment information which in this example is a credit card number and an expiration date. Figure 16 can therefore represent a scenario where the merchant does not need a signature or other authorization input to authorize the insurance payment. This may be the case when the payment is a one-time payment rather than a recurring payment.

Various types of information can be requested from the user in a user interface in conjunction with the display of a document to the user. For example, any information necessary to perform an ACH transaction can be requested including a bank routing number, an account number, a check number, etc. Similarly, any information necessary to perform a credit or debit card transaction can be requested including the card number, a card verification value (CVV), an expiration date, an address associated with the card, a desired payment amount, etc. Other types of information can also be requested when non-payment related documents are presented to the user. For example, if the document is a contract or agreement that requires an additional term or other information, the user can be requested to provide the additional term or other information. Accordingly, any type of information can be requested in conjunction with the display of a document to the user.

In some examples of the invention, the type of information that is requested from the user can be specified by merchant computing system 102 (e.g. via user interface 200 or a similar user interface). For example, in some examples, when merchant computing system 102 submits a request for a signature or other authorization input, any information that is not provided in the request (e.g. any information not entered into the fields shown in Figure 2) can be requested from the user. In other examples, server system 101 may automatically request certain types of information based on the type of request being made.

In some examples, it may be desirable to increase the amount of information obtained from the user to ensure the identity of the user which can be beneficial in minimizing the occurrence of fraud. For example, in addition to or in place of the authenticating information described with reference to Figure 9 above, the present invention can obtain a location of the user, a picture of the user or of the user's identification card, or biometric information of the user.

In some examples, client computing device 103 can be used to obtain the location of the user while the user provides his signature or other requested input. For example, in GPS-enabled devices, GPS coordinates can be obtained and returned to server system 101 and/or merchant computing system 102 with the user's signature. When the user's location is provided with the user's signature, the location can be used to assess a strength of the authenticity of the user's signature. For example, if the user's location received with the user's signature is the same as the user's home address (which may be known by merchant computing system 102), there can be a high level of confidence in the authenticity of the user's signature (i.e. because it is highly unlikely that someone other than the user would have the user's computing device, possibly know the user's authenticating information, and be located at the user's residence).

In some examples, the user can be requested to take a picture of himself or of his identification card and include the picture with the signature or other input returned to merchant computing system 102. For example, when the user is asked to provide a signature or other input to authorize the merchant to perform an action, the user can also be asked to take a picture of himself (e.g. using a camera of client computing device 103). The picture of the user can be returned to server system 101 and/or merchant computing system 102 to be used as additional proof of the authenticity of the user's signature or other input.

In examples where a picture of the user is obtained, the system can be configured to collect and store pictures of each registered user of the system. In this way, when a particular user provides a picture in conjunction with user input, the provided picture can be compared to the picture stored for the user. For example, the two pictures can be displayed to an employee of the merchant for comparison prior to accepting the user input as authorization. Even if a picture is not stored for a user, a picture can still be requested and used to enhance the authenticity of user input such as by ensuring that the picture is of a person having the expected age, race, gender, etc. In some examples, the process of verifying a picture can be automated using facial recognition software.

In some examples, the user can be requested to take a picture of his identification card such as a driver's license or other form of identification. The picture of the identification card can be processed to retrieve information such as by performing optical character recognition (OCR) to obtain a user's name, birthdate, or address from the picture of the identification card. Any obtained information can be added to a user's account or compared to already-known information about the user. In some examples, a photo contained on the user's identification card can also be processed in a manner similar to a picture directly taken by the user as described above. In some examples, the user can be requested to provide a picture of himself in addition to a picture of the user's identification card. In such cases, a comparison of the two pictures can serve to verify the identity of the user.

Pictures can also be used to enhance the identity verification process by accessing metadata of the pictures. For example, many devices generate metadata when a picture is taken. This metadata can define a location where the picture was taken such as the GPS coordinates of a phone when the phone takes the picture. In some examples when a picture is submitted as part of the authentication process, the system can compare the location where the picture was taken as defined in the metadata of the picture to the current location of the client computing device.

If the locations do not match, or are not within a specified distance, the system can identify that the user of the client computing device may be an unauthorized user. For example, if an unauthorized user obtained a picture of the user (or the user's ID) and attempted to use the picture of the user to authenticate with the system as the user, and if the unauthorized user attempted to authenticate using the picture at a location that differed from the location where the picture was taken, the system can detect the differences in the two locations and can cause the authentication to fail. In this way, the system can ensure that the picture submitted for authentication is taken at the same location as the user's location during authentication.

In addition to location metadata, other metadata of a picture can also be used to enhance the identity verification process. For example, a timestamp of the picture can be used to ensure that the picture is taken at the same time as the authentication process. In such cases, the system may compare the timestamp of the picture to the time when the picture is submitted to ensure that the times are within a specified period. Requiring the picture to be taken at the same relative time as authentication can minimize the possibility that an unauthorized user can obtain a picture of the user (or the user's ID) that will pass authentication.

The picture metadata can also be used to identify whether the picture has been altered. For example, an unauthorized user may attempt to modify a picture so that the modified picture will pass authentication (e.g. modifying a picture to appear more similar to the user). The system can identify metadata indicating that a picture has been altered and can potentially cause the authentication to fail.

As another example, metadata describing the device that took the picture can be used to ensure that the same device used for authentication/authorization is used to take the picture. In short, the system can analyze many different types of picture metadata to enhance the identity verification process when pictures are used.

In some examples, biometric information of the user can be obtained using client computing device 103 and sent with the user's signature or other input. For example, client computing device 103 can be configured to perform a fingerprint, face, iris, or retina scan. The obtained scan can serve as verification of the user's identity (e.g. by comparing the obtained scan to a stored scan) when providing the signature or other input as authorization for the merchant to perform some action.

In some examples, the authenticity of the user's signature can be verified by comparing a received signature to a stored signature for the user. To enable this type of signature verification, in some examples, the above described approach for remotely obtaining a user's signature can be used to obtain a copy of the user's signature to store for later comparison. For example, when a user registers to use the system of the present invention, a request can be sent to the user to provide a signature as described above. This initial signature can be received and stored for later comparison when the user desires to provide remote authorization using his signature. For example, when a merchant desires to receive the user's authorization to perform an action, the user's signature can again be obtained. The newly obtained signature can be compared to the stored signature for the user. When the signatures match, the authenticity of the user can be verified.

Each of the above described approaches for increasing the authenticity of the user's signature or other input can be used alone or in combination with another approach. For example, the user can be prompted to input some form of authenticating information (e.g. account information, social security number, etc.) in addition to providing a picture or scanning his fingerprint. Similarly, the location of the user can be included when the user also provides a picture of his driver's license.

In some examples, the specific approach for authenticating the user can be a merchant selectable feature. For example, if the merchant desires a high level of confidence in the authenticity of the user input (e.g. when the user is providing authorization for a high value/risk transaction), the merchant can specify in its request to server system 101 that the user provide a biometric scan or multiple levels of authenticating information. Accordingly, in such examples, the merchant can control the amount of authentication the user must perform in order to provide authorization remotely using the user's signature or other input.

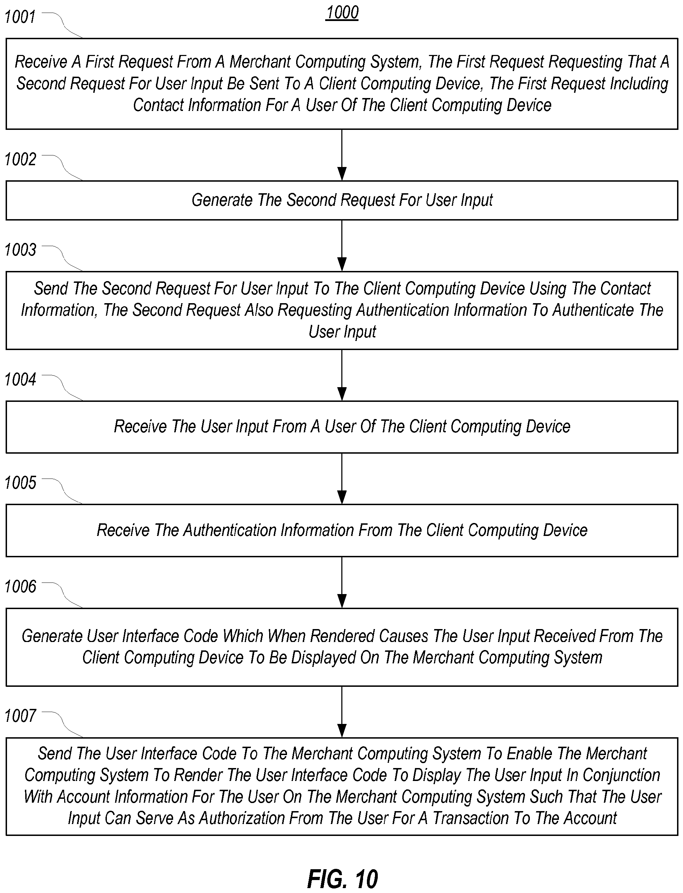

Figure 10 illustrates a flowchart of an exemplary method 1000 for providing a request for user input to a client computing device over a network. Method 1000 can be performed by a server computing system that can communicate with a user's computing device.

Method 1000 includes an act 1001 of receiving a first request from a merchant computing system, the first request requesting that a second request for user input be sent to a client computing device, the first request including contact information for a user of the client computing device. For example, server system 101 can receive a request from merchant computing system 102 that includes contact information for sending a signature request to a user using client computing device 103.

Method 1000 includes an act 1002 of generating the second request for user input. For example, server system 101 can generate a signature request.

Method 1000 includes an act 1003 of sending the second request for user input to the client computing device using the contact information, the second request also requesting authentication information to authenticate the user input. For example, server system 101 can email, text, or otherwise send a link to client computing device 103.

Method 1000 includes an act 1004 of receiving the user input from a user of the client computing device. For example, server system 101 can receive the user's signature.

Method 1000 includes an act 1005 of receiving the authentication information from the client computing device. For example, server system 101 can receive a location of client computing device 103, a picture taken by client computing device 103, a biometric scan taken by client computing device 103, a shared secret, etc.

Method 1000 includes an act 1006 of generating user interface code which when rendered causes the user input received from the client computing device to be displayed on the merchant computing system. For example, server system 101 can generate user interface code for displaying the user input.

Method 1000 includes an act 1007 of sending the user interface code to the merchant computing system to enable the merchant computing system to render the user interface code to display the user input in conjunction with account information for the user on the merchant computing system such that the user input can serve as authorization from the user for a transaction to the account. For example, server system 101 can send the user interface code to merchant computing system 102 to enable merchant computing system 102 to perform a financial transaction.

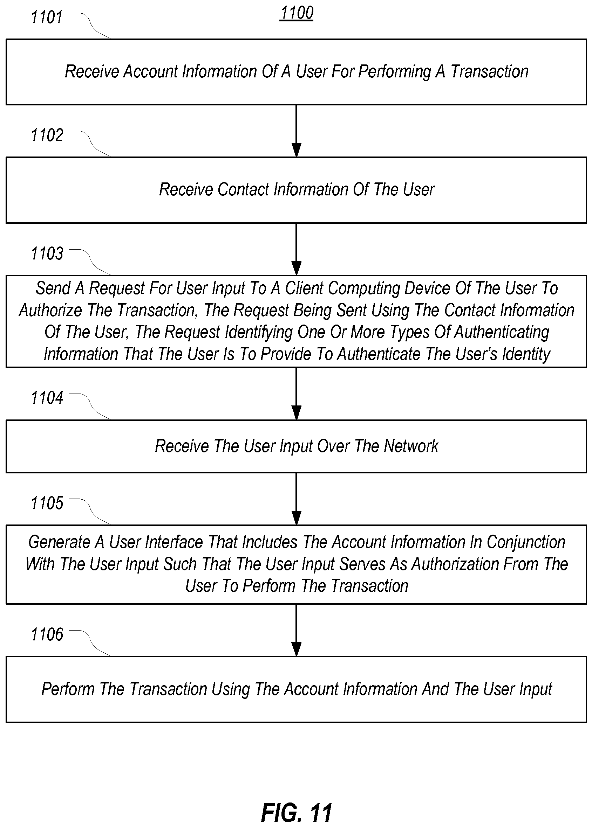

Figure 11 illustrates a flowchart of an exemplary method 1100 for requesting user input from a remote user over a network. Method 1100 can be performed by a merchant computing system that can communicate with a user's computing device via a server system.

Method 1100 includes an act 1101 of receiving account information of a user for performing a transaction. For example, merchant computing system 102 can receive account information for a transaction to be entered into with a user of client computing device 103.

Method 1100 includes an act 1102 of receiving contact information of the user. For example, merchant computing system 102 can receive contact information for communicating with client computing device 103.

Method 1100 includes an act 1103 of sending a request for user input to a client computing device of the user to authorize the transaction, the request being sent using the contact information of the user, the request identifying one or more types of authenticating information that the user is to provide to authenticate the user's identity. For example, merchant computing system 102 can send a request, via server system 101, to client computing device 103 using the contact information. The request can specify the type of authenticating information the user must provide to authenticate the user's identity.

Method 1100 includes an act 1104 of receiving the user input over the network. For example, merchant computing system 102 can receive the user's signature via server system 101.

Method 1100 includes an act 1105 of generating a user interface that includes the account information in conjunction with the user input such that the user input serves as authorization from the user to perform the transaction. For example, merchant computing system 102 can display the user input in conjunction with the account information.

Method 1100 includes an act 1106 of performing the transaction using the account information and the user input. For example, merchant computing system 102 can perform a credit card transaction using the user's signature as authorization.

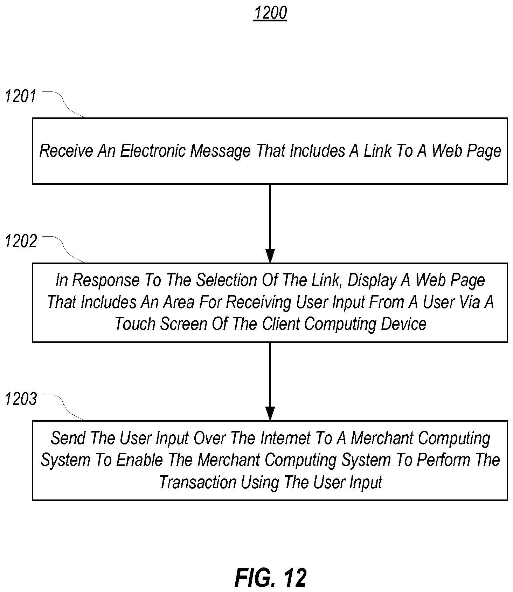

Figure 12 illustrates a flowchart of an exemplary method 1200 for remotely providing user input to authorize a transaction. Method 1200 can be performed by a client computing device that can communicate with a server system.

Method 1200 includes an act 1201 of receiving an electronic message that includes a link to a web page. For example, client computing device 103 can receive a text message that includes a link to a web page having an area to input a user's signature.

Method 1200 includes an act 1202 of in response to the selection of the link, displaying a web page that includes an area for receiving user input from a user via a touch screen of the client computing device. For example, when the user selects the link, a web page can be displayed by a browser on client computing device 103 that provides a signature area where the user can input a signature.

Method 1200 includes an act 1203 of sending the user input over the internet to a merchant computing system to enable the merchant computing system to perform the transaction using the user input. For example, client computing device 103 can send the user's signature to merchant computing system 102 via server system 101.

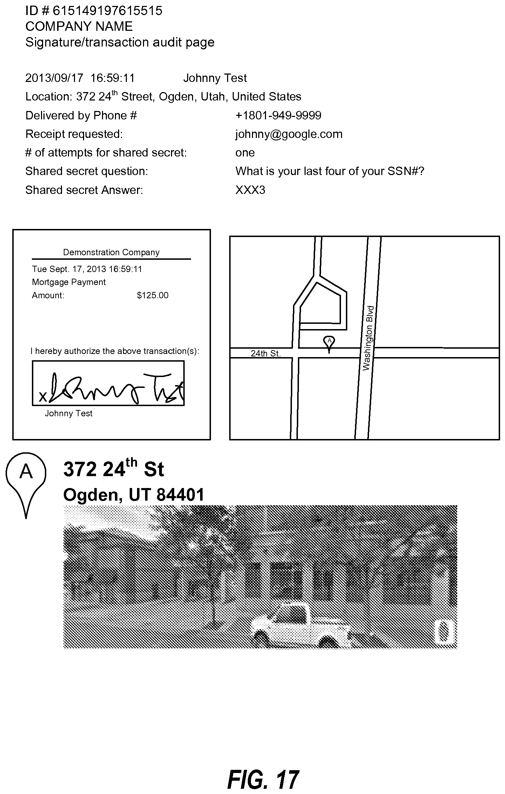

In some examples, an audit report can be created for each signature received using the above described process. Depending on the type of authentication that is employed, an audit report can include the signature (or other type of authorization input), the contact information used to send the signature request to the user, the location of the device when the signature was provided (including a map view and/or street view of the location), the time/date when the signature was provided, the shared secret question presented and answer provided, contact information used to send a receipt, a picture of the user or of the user's identity card, biometric information, etc. Figure 17 illustrates an example of an audit report that can be generated.

An audit report can be provided to the user and/or the merchant as evidence that the user provided authorization for a transaction. For example, if a user, after providing authorization, claimed to have not authorized a transaction, the merchant could provide the audit report to the user to challenge his claim.

## Claims

1. A method, implemented by a server computing system (101), to present a document representing an agreement to a user using a client computing device (103) and to obtain user input from the user to serve as authorization from the user to cause the performance of the agreement, wherein the method comprises:
providing, by the server computing system, an interface to a merchant computing system, the interface being configured to receive requests from the merchant computing system;
receiving, via the interface, one or more first requests sent over the internet by the merchant computing system, the one or more first requests including:
(1) a request to obtain said user input to serve as said authorization from the user, and
(2) contact information for the user;
in response to receiving the one or more first requests, the server computing system performs the following:
generates a first user interface (1302, 1402, 1502) that includes a prompt to input an authentication code;
generates a second user interface (1303, 1403, 1503) that includes a document to be presented to the user, the document representing an agreement that the user has made or will make;
generates a third user interface (1304, 1405, 1505) that includes an input area for receiving the user input which was requested in the one or more first requests;
transmits a second request (1301, 1401, 1501) over the internet (104) to the client computing device using the contact information that was provided in the one or more first requests, the second request including a link which the user can select to cause the first user interface to be displayed;
in response to the user selecting the link included in the second request, transmits, to the client computing device, the first user interface;
in response to the user inputting the authentication code into the first user interface, transmits the second user interface to the client computing device such that the document is displayed to the user on the client computing device as part of the second user interface;
in conjunction with transmitting the second user interface to the client computing device, transmits the third user interface to the client computing device to allow the user to provide the user input into the input area in conjunction with reviewing the document, the user input serving as authorization for the performance of the agreement that the document represents;
in response to the user providing the user input into the input area of the third user interface, receives from the client computing device one or more third requests that include the user input;
**characterized in that**:
the authorization from the user is an authorization for the merchant computing system to perform a transaction to an account of the user;
the one or more first requests further includes:
(3) information representing the transaction, and
(4) said document to be presented to the user, said agreement represented by the document concerning the transaction to be performed to the account of the user; and
in response to receiving the one or more first requests, the server computing system further performs the following:
sends the user input to the merchant computing system to enable the merchant computing system to associate the user input with the account for the user on the merchant computing system such that the user input can serve as authorization from the user to cause the performance of the agreement authorized by the user input whereby the transaction is performed to the account of the user;
in response to receiving the one or more third requests, transmits a fourth user interface (1305, 1406, 1506) to the client computing device, the fourth user interface enabling the user to request a receipt for the transaction; and
in response to the user inputting an address into the fourth user interface, generates and sends a receipt for the transaction to the address.

2. The method of claim 1, wherein the user input comprises a signature of the user.

3. The method of claim 1, wherein the agreement comprises an agreement to make one or more payments.

4. The method of claim 3, wherein the user input comprises payment information for making the one or more payments.

5. The method of claim 3, wherein the user input authorizes the one or more payments using payment information stored by the merchant computing system.

6. The method of claim 1, wherein the server computing system generates a fifth user interface (1404, 1504) for receiving payment information from the user and transmits the fifth user interface to the client computing device in conjunction with transmitting the second user interface.

7. The method of claim 1, wherein the first, second and third user interfaces are web pages.

8. The method of claim 1, wherein the server computing system transmits the second user interface to the client computing device before transmitting the third user interface to the client computing device.

## Patentansprüche

1. Verfahren, das von einem Server-Computersystem (101) implementiert ist, um einem Benutzer unter Verwendung einer Client-Computervorrichtung (103) ein Dokument vorzulegen, das eine Vereinbarung darstellt, und um Benutzereingaben vom Benutzer zu erhalten, die als Autorisierung des Benutzers dienen, die Erfüllung der Vereinbarung zu bewirken, wobei das Verfahren umfasst:
Bereitstellen einer Schnittstelle zu einem Händler-Computersystem durch das Server-Computersystem, wobei die Schnittstelle konfiguriert ist, um Anfragen von dem Händler-Computersystem zu empfangen;
Empfangen über die Schnittstelle einer oder mehrerer erster Anfragen, die über das Internet vom Händler-Computersystem gesandt wurden, wobei die eine oder mehreren ersten Anfragen Folgendes beinhalten:
(1) eine Anfrage, die Benutzereingaben zu erhalten, die als Autorisierung des Benutzers dienen,
und
(2) Kontaktinformationen für den Benutzer;
wobei als Reaktion auf das Empfangen der einen oder mehreren ersten Anfragen das Server-Computersystem Folgendes ausführt:
Erzeugen einer ersten Benutzeroberfläche (1302, 1402, 1502), die eine Aufforderung zur Eingabe eines Authentifizierungscodes enthält;
Erzeugen einer zweiten Benutzeroberfläche (1303, 1403, 1503), die ein dem Benutzer vorzulegendes Dokument beinhaltet, wobei das Dokument eine Vereinbarung darstellt, die der Benutzer getroffen hat oder noch treffen wird;
Erzeugen einer dritten Benutzeroberfläche (1304, 1405, 1505), die einen Eingabebereich zum Empfangen der Benutzereingaben beinhaltet, die in der einen oder mehreren ersten Anfragen angefordert wurden;
Senden einer zweiten Anfrage (1301, 1401, 1501) über das Internet (104) an die Client-Computervorrichtung unter Verwendung der Kontaktinformationen, die in der einen oder mehreren ersten Anfrage bereitgestellt wurden, wobei die zweite Anfrage einen Link beinhaltet, den der Benutzer auswählen kann, um die Anzeige der ersten Benutzeroberfläche zu veranlassen;
als Reaktion darauf, dass der Benutzer den in der zweiten Anfrage enthaltenen Link auswählt, Übertragen der ersten Benutzeroberfläche an die Client-Computervorrichtung;
als Reaktion auf die Eingabe des Authentifizierungscodes durch den Benutzer in die erste Benutzeroberfläche, Übertragen der zweiten Benutzeroberfläche an die Client-Computervorrichtung, so dass das Dokument dem Benutzer auf der Client-Computervorrichtung als Teil der zweiten Benutzeroberfläche angezeigt wird;
in Verbindung mit der Übertragung der zweiten Benutzeroberfläche an die Client-Computervorrichtung Übertragen der dritten Benutzeroberfläche an die Client-Computervorrichtung, um es dem Benutzer zu ermöglichen, die Benutzereingaben im Eingabebereich in Verbindung mit der Überprüfung des Dokuments bereitzustellen, wobei die Benutzereingaben als Autorisierung für die Erfüllung der Vereinbarung dienen, die das Dokument repräsentiert;
als Reaktion darauf, dass der Benutzer die Benutzereingaben in den Eingabebereich der dritten Benutzeroberfläche eingibt, Erhalten von der Client-Computervorrichtung einer oder mehrerer dritte Anfragen, die die Benutzereingaben enthalten;
**dadurch gekennzeichnet, dass**:
die Autorisierung des Benutzers eine Autorisierung für das Händler-Computersystem ist, eine Kontobewegung auf dem Konto des Benutzers durchzuführen;
wobei die eine oder mehreren ersten Anfragen des Weiteren beinhalten:
(3) Informationen über die Transaktion, und
(4) das Dokument, das dem Benutzer vorgelegt werden soll, wobei die durch das Dokument repräsentierte Vereinbarung die Kontobewegung betrifft, die auf dem Konto des Benutzers erfolgen soll; und
wobei als Reaktion auf das Empfangen der einen oder mehreren ersten Anfragen das Server-Computersystem weiterhin Folgendes ausführt:
Senden der Benutzereingaben an das Händler-Computersystem, damit das Händler-Computersystem die Benutzereingaben mit dem Konto für den Benutzer auf dem Händler-Computersystem verknüpfen kann, so dass die Benutzereingaben als Autorisierung des Benutzers dienen können, die Erfüllung der durch die Benutzereingaben autorisierten Vereinbarung zu bewirken, wodurch die Kontobewegung auf dem Konto des Benutzers ausgeführt wird;
als Reaktion auf das Empfangen der einen oder mehreren dritten Anfragen Senden einer vierten Benutzeroberfläche (1305, 1406, 1506) an die Client-Computervorrichtung, wobei die vierte Benutzeroberfläche es dem Benutzer ermöglicht, eine Quittung für die Transaktion anzufordern; und
als Reaktion darauf, dass der Benutzer eine Adresse in die vierte Benutzeroberfläche eingibt, Erzeugen einer Quittung für die Transaktion und Senden dieser an die Adresse.

2. Verfahren nach Anspruch 1, wobei die Benutzereingaben eine Unterschrift des Benutzers umfassen.

3. Verfahren nach Anspruch 1, wobei die Vereinbarung eine Vereinbarung zum Ausführen einer oder mehrerer Zahlungen umfasst.

4. Verfahren nach Anspruch 3, wobei die Benutzereingaben Zahlungsinformationen zum Ausführen der einen oder mehreren Zahlungen umfasst.

5. Verfahren nach Anspruch 3, wobei die Benutzereingaben die eine oder die mehreren Zahlungen unter Verwendung von Zahlungsinformationen autorisieren, die im Händler-Computersystem gespeichert sind.

6. Verfahren nach Anspruch 1, wobei das Server-Computersystem eine fünfte Benutzeroberfläche (1404, 1504) zum Empfangen von Zahlungsinformationen von dem Benutzer erzeugt und die fünfte Benutzeroberfläche an die Client-Computervorrichtung in Verbindung mit dem Senden der zweiten Benutzeroberfläche sendet.

7. Verfahren nach Anspruch 1, wobei die erste, zweite und dritte Benutzeroberfläche Webseiten sind.

8. Verfahren nach Anspruch 1, wobei das Server-Computersystem die zweite Benutzeroberfläche an die Client-Computervorrichtung überträgt, bevor es die dritte Benutzeroberfläche an die Client-Computervorrichtung überträgt.

## Revendications

1. Procédé, mis en œuvre par un système informatique de serveur (101), pour présenter un document représentant un accord à un utilisateur à l'aide d'un dispositif informatique de client (103) et pour obtenir une entrée d'utilisateur à partir de l'utilisateur pour servir en tant qu'autorisation de l'utilisateur pour entraîner la conclusion de l'accord, le procédé comprenant :
fournir, par le système informatique de serveur, une interface à un système informatique de marchand, l'interface étant configurée pour recevoir des demandes à partir du système informatique de marchand ;
recevoir, par l'intermédiaire de l'interface, une ou plusieurs premières demandes envoyées sur Internet par le système informatique de marchand, la ou les premières demandes comprenant :
(1) une demande d'obtention de ladite entrée d'utilisateur pour servir en tant que ladite autorisation de l'utilisateur, et
(2) des informations de contact pour l'utilisateur ;
en réponse à la réception de la ou des premières demandes, le système informatique de serveur effectue ce qui suit :
génère une première interface utilisateur (1302, 1402, 1502) qui comprend une invite à entrer d'un code d'authentification ;
génère une deuxième interface utilisateur (1303, 1403, 1503) qui comprend un document à présenter à l'utilisateur, le document représentant un accord que l'utilisateur a conclu ou conclura ;
génère une troisième interface utilisateur (1304, 1405, 1505) qui comprend une zone d'entrée pour recevoir l'entrée d'utilisateur qui a été demandée dans la ou les premières demandes ;
transmet une seconde demande (1301, 1401, 1501) sur Internet (104) au dispositif informatique de client à l'aide des informations de contact qui ont été fournies dans la ou les premières demandes, la seconde demande comprenant un lien que l'utilisateur peut sélectionner pour amener la première interface utilisateur à être affichée ;
en réponse à la sélection par l'utilisateur du lien compris dans la seconde demande, transmet, au dispositif informatique de client, la première interface utilisateur ;
en réponse à l'entrée par l'utilisateur du code d'authentification dans la première interface utilisateur, transmet la deuxième interface utilisateur au dispositif informatique de client de telle sorte que le document est affiché à l'utilisateur sur le dispositif informatique de client en tant que partie de la deuxième interface utilisateur ;
conjointement avec la transmission de la deuxième interface utilisateur au dispositif informatique de client, transmet la troisième interface utilisateur au dispositif informatique de client pour permettre à l'utilisateur de fournir l'entrée d'utilisateur dans la zone d'entrée conjointement avec une revue du document, l'entrée d'utilisateur servant en tant qu'autorisation pour la conclusion de l'accord que le document représente ;
en réponse à la fourniture par l'utilisateur de l'entrée d'utilisateur dans la zone d'entrée de la troisième interface utilisateur, reçoit à partir du dispositif informatique de client une ou plusieurs troisièmes demandes qui comprennent l'entrée d'utilisateur ;
**caractérisé par le fait que** :
l'autorisation de l'utilisateur est une autorisation pour le système informatique de marchand pour effectuer une transaction vers un compte de l'utilisateur ;
la ou les premières demandes comprennent en outre :
(3) des informations représentant la transaction, et
(4) ledit document à présenter à l'utilisateur, ledit accord représenté par le document concernant la transaction à effectuer vers le compte de l'utilisateur ; et
en réponse à la réception de la ou des premières demandes, le système informatique de serveur effectue en outre ce qui suit :
envoie l'entrée d'utilisateur au système informatique de marchand pour permettre au système informatique de marchand d'associer l'entrée d'utilisateur au compte pour l'utilisateur sur le système informatique de marchand de telle sorte que l'entrée d'utilisateur peut servir en tant qu'autorisation de l'utilisateur pour entraîner la conclusion de l'accord autorisé par l'entrée d'utilisateur, moyennant quoi la transaction est effectuée vers le compte de l'utilisateur ;
en réponse à la réception de la ou des troisièmes demandes, transmet une quatrième interface utilisateur (1305, 1406, 1506) au dispositif informatique de client, la quatrième interface utilisateur permettant à l'utilisateur de demander un reçu pour la transaction ; et
en réponse à l'entrée par l'utilisateur d'une adresse dans la quatrième interface utilisateur, génère et envoie un reçu pour la transaction vers l'adresse.

2. Procédé selon la revendication 1, dans lequel l'entrée d'utilisateur comprend une signature de l'utilisateur.

3. Procédé selon la revendication 1, dans lequel l'accord comprend un accord pour effectuer un ou plusieurs paiements.

4. Procédé selon la revendication 3, dans lequel l'entrée d'utilisateur comprend des informations de paiement pour effectuer le ou les paiements.

5. Procédé selon la revendication 3, dans lequel l'entrée d'utilisateur autorise le ou les paiements en utilisant des informations de paiement stockées par le système informatique de marchand.

6. Procédé selon la revendication 1, dans lequel le système informatique de serveur génère une cinquième interface utilisateur (1404, 1504) pour recevoir des informations de paiement à partir de l'utilisateur et transmet la cinquième interface utilisateur au dispositif informatique de client conjointement avec la transmission de la deuxième interface utilisateur.

7. Procédé selon la revendication 1, dans lequel les première, deuxième et troisième interfaces utilisateurs sont des pages web.

8. Procédé selon la revendication 1, dans lequel le système informatique de serveur transmet la deuxième interface utilisateur au dispositif informatique de client avant de transmettre la troisième interface utilisateur au dispositif informatique de client.
